# EUROPEAN PATENT SPECIFICATION

(11) **EP 3 629 530 B1**
(45) Date of publication and mention of the grant of the patent: **22.02.2023**
(21) Application number: 18827648.9
(22) Date of filing: 03.07.2018
(51) Int. Cl.: H04L 45/00, H04L 12/46, H04L 45/50

(54) **METHOD AND DEVICE FOR ACHIEVING BIDIRECTIONAL SEGMENT ROUTING TUNNEL AND STORAGE MEDIUM,**
VERFAHREN UND VORRICHTUNG ZUM ERREICHEN EINES TUNNELS ZUM BIDIREKTIONALEN SEGMENTROUTING UND SPEICHERMEDIUM
PROCÉDÉ ET DISPOSITIF PERMETTANT DE RÉALISER UN TUNNEL DE ROUTAGE PAR SEGMENT BIDIRECTIONNEL ET MOYEN DE STOCKAGE

(30) Priority: 03.07.2017 CN 201710534502
(43) Date of publication of application: 01.04.2020
(73) Proprietor: ZTE Corporation, Shenzhen, Guangdong 518057 (CN)
(72) Inventor: ZHAN, Shuangping, Shenzhen, Guangdong 518057 (CN); WEN, Jianzhong, Shenzhen, Guangdong 518057 (CN); TAO, Muliu, Shenzhen, Guangdong 518057 (CN); LIU, Aihua, Shenzhen, Guangdong 518057 (CN); LIAO, Guoqing, Shenzhen, Guangdong 518057 (CN)
(74) Representative: Canzler & Bergmeier Patentanwälte Partnerschaft mbB
(86) International application number: PCT/CN2018/094210
(87) International publication number: WO 2019/007316

(56) References cited:
- CN-A- 104 980 350
- US-A1- 2013 259 067
- US-A1- 2013 332 634
- US-A1- 2016 366 052
- LI N WU HUAWEI Z: "Tunnel Segment in Segment Routing; draft-li-spring-tunnel-segment-01.txt", TUNNEL SEGMENT IN SEGMENT ROUTING; DRAFT-LI-SPRING-TUNNEL-SEGMENT-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 13 March 2016 (2016-03-13), pages 1-8, XP015111699, [retrieved on 2016-03-13]
- HUAWEI: "Tunnel Segment in Segment Routing Draft-Li-Spring-Tunnel-Segment-OO", IETF, 7 March 2016 (2016-03-07), XP015108056,

## Description

### TECHNICAL FIELD

The present disclosure relates, but is not limited to the field of tunnel technologies, MPLS/MPLS-TP network SR tunnel technologies, and in particular, to a method, a device for establishing a SR (segment routing) tunnel and a computer storage medium,

### BACKGROUND

The IP/MPLS or MPLS-TP technology-based IPRAN and PTN packet networks are widely applied to bearing backhaul service of the wireless base station. An end-to-end tunnel is established by the MPLS label switching technology, so as to provide a connection-oriented service for services. However, the conventional tunnel establishment techniques (LDP, RSVP-TE, static tunnel) all have their own problems.

As to the RSVP-TE tunnel, an intermediate node needs to maintain the soft state of each connection, and the scalability is poor.

As to the LDP tunnel and the static tunnel, although it is not required to maintain the state at the control plane, it is required to configure forwarding information for each connection at the forwarding plane, and the forwarding plane also has the scalability problem.

It is required to assign a label to each node in establishment and modification of an end-to-end tunnel, and the service deployment is inefficient.

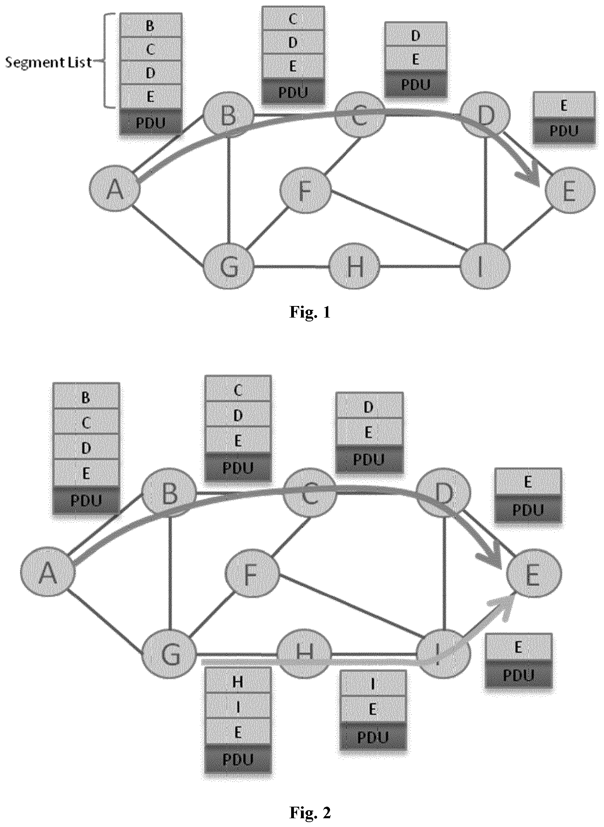

The source routing-based segment routing technology can solve these problems. An end-to-end service path is identified by pushing a series of labels (segments) at a source node, of which the implementation mode is shown in Fig. 1. After a packet enters a head node A, four segments BCDE are pushed on the packet, and then the node A guides the packet to be forwarded to a node B according to the outermost segment B. After the segment B is popped off at the node B, the packet is guided to be forwarded to a node C according to the segment C, and similarly, after the segment C is popped off at the node C, the packet is forwarded to a node D according to the inner segment D. Finally, the packet is forwarded to a destination node E. The SR can bring the following advantages.

The intermediate node does not perceive the service state, but only maintains the topology information, so that there is no scalability problem. However, in some specific scenarios, implementation of bidirectional end-to-end transmission of information by tunnel identification, or the like, cannot be realized in the related art.

A non-patent document "LI N WU HUAWEI Z: "Tunnel Segment in Segment Routing; draft-Ii-spring-tunnel-segment-01. txt", TUNNEL SEGMENT IN SEGMENT ROUTING; DRAFT-LI-SPRING-TUNNEL-SEGMENT-01 .TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 13 March 2016 (2016-03-13), pages 1-8, XP015111699, [retrieved on 2016-03-13]" introduces a new type of segment, Tunnel Segment, for the segment routing (SR). Tunnel segment can be used to reduce SID stack depth of SR path, span the non-SR domain or provide differentiated services. Forwarding mechanisms and requirements of control plane and data models for tunnel segments are also defined.

A U.S. patent application publication No. US2013259067 (A1) discloses a method for providing an MPLS tunnel adapted for sharing bandwidth (BW) in an MPLS network. The method comprises establishing the MPLS tunnel as a working MPLS tunnel (ST) to be shared by a plurality of pseudo wires (PWs) passing at least partially along the path of the tunnel ST, wherein a predetermined bandwidth of the bandwidth allocated for the ST is adapted to be shared by the plurality of PWs, of which at least one PW has a different source point and/or a different destination termination point at the ST path, from at least one other of the plurality of PWs.

### SUMMARY

Embodiments of the present disclosure provide a method and a device for implementing a bidirectional segment routing tunnel, and a computer storage medium. The features of the method the device and the computer storage medium according to the present invention are defined in the independent claims, and the preferable features according to the present invention are defined in the dependent claims.

According to the present disclosure, the problem that the SR in the MPLS/MPLS-TP network can only realize unidirectional identification of the tunnel in the head node can be solved. Because the List SIDs of the tunnel is configured in the end points in both of the first direction and the second direction, the tunnel related to the same two end points can be identified by the two end points. As such, the requirement that different end points need to identify the tunnel is met, the SR application scenes, in which different end points identify the tunnel for service transmission, are expanded, and the SR technology can be applied to all networks.

### BRIEF DESCRIPTION OF THE DRAWINGS

Fig. 1 is a schematic diagram of a SR-based tunnel model in the related art;
Fig. 2 is a schematic diagram illustrating that a connection cannot be identified at a tail node of a SR tunnel in the related art;
Fig. 3 is a schematic diagram illustrating identification of different SR paths by List SIDs in an embodiment of the present disclosure;
Fig. 4 is a schematic diagram illustrating bidirectional binding of a SR tunnel by List SIDs in an embodiment of the present disclosure;
Fig. 5 is a schematic diagram of networking in an embodiment of the present disclosure; and
Fig. 6 is a flowchart of implementation steps of binding of bidirectional SR tunnel in an embodiment of the present disclosure.

### DETAILED DESCRIPTION

To make the objects, technical solutions and advantages of the present disclosure more apparent, the technical solutions of the present disclosure will be further described below in detail with reference to specific embodiments. It should be noted that the embodiments of the present disclosure and features of the embodiments can be arbitrarily combined with each other without conflict.

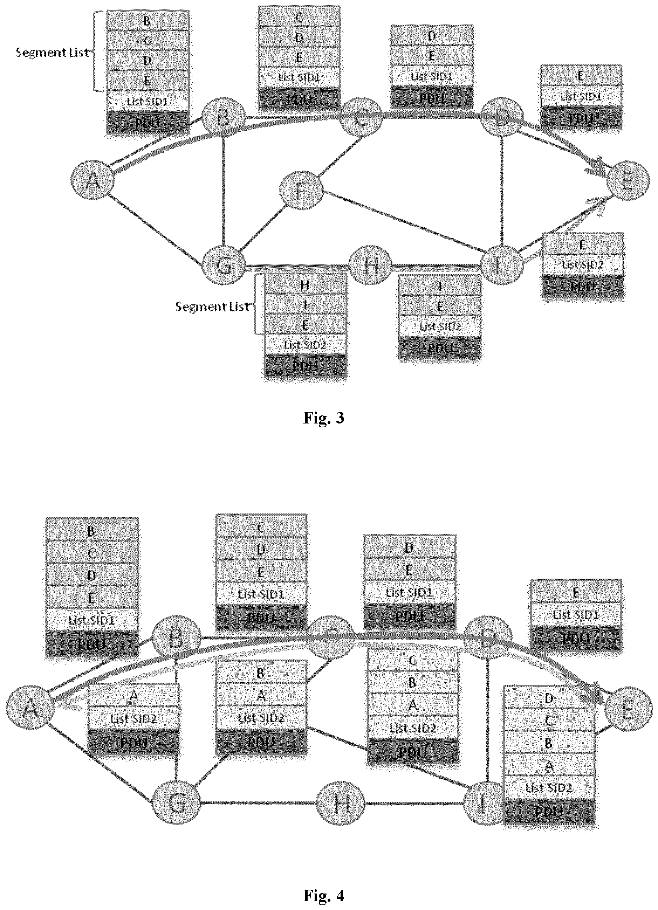

It has been discovered that: in some technical schemes, the establishment and modification of the tunnel only need operations at the head node, and no operation is required at other nodes, so that services can be deployed quickly. For example, the SR tunnel, like a normal MPLS tunnel, is a unidirectional tunnel, but in some scenarios, such as scenarios requiring strict bidirectional same routing, it is necessary to use a bidirectional tunnel. For these scenarios, MPLS may associate two unidirectional tunnels at both end points of a tunnel to form a bidirectional tunnel. However, since for the SR tunnel the connection state is only maintained at the head node and no connection information is carried in the tail node, as shown in Fig. 2, the tunnel from the node A to the node E and the tunnel from the node G to the node E both carry the label of the node E when reaching the node E, and the two tunnels cannot be distinguished from each other. Therefore, association and binding of two unidirectional tunnels cannot be realized at both end points, resulting in limitations on application of SR. An embodiment of the present disclosure provides a method for implementing SR bidirectional tunnel, which involves a forwarding device running SR and a related controller, and an end-to-end path is identified by assigning a unique label to each SR tunnel. The method may be as shown in Fig. 3, compared to the standard SR tunnel, the method introduces List SIDs, which are independent of the aforementioned unique label that identifies the end-to-end path, to identify two opposite directions, i.e., a direction from a head node to a tail node and a direction from the tail node to the head node, of two tunnels of an end-to-end connection. The List SID, as a part of a label stack of a SR tunnel, is placed into the label stack to identify a complete segment list of a unidirectional SR tunnel. In this way, the tail node may identify different SR unidirectional tunnels through different List SIDs. As shown in Fig. 3, the node E can identify a tunnel from the node A to the node E by the label of List SID1, and can identify a tunnel from the node G to the node E by the label of List SID2. As such, the related problem that an end-to-end path cannot be identified at the tail node in SR can be alleviated.

In some embodiments, the method of the present disclosure may construct a bidirectional tunnel based on the establishment of a binding relationship between two single tunnels indicated by List SID2s in opposite directions. As shown in Fig. 4, a SR tunnel having an OUT label of List SID1 and a SR tunnel having an IN label of List SID2 may be associated and bound at the node A as a bidirectional SR tunnel, and similarly, a unidirectional SR tunnel having an IN label of List SID1 and a unidirectional SR tunnel having an OUT label of List SID2 may be associated and bound at the node E as a bidirectional SR tunnel

An embodiment of the present disclosure provides a method for implementing a bidirectional segment routing tunnel, which mainly includes the following steps: after receiving, by a controller, a command of establishing a bidirectional SR tunnel between a node A and a node Z, calculating, by the controller, a path between the node A and the node Z satisfying a requirement of the command, and assigning, by the controller, unique List SIDs to a tunnel in a first direction from the node A to the node Z and a tunnel in a second direction from the node Z to the node A corresponding to the path, respectively; and pushing, by the controller and at each of both end points of the bidirectional SR tunnel, a SR label stack on a user packet after placing the List SID, as a part of the SR label stack, into the SR label stack and forwarding the user packet.

In other embodiments, the method further includes: establishing, according to the List SID of the tunnel in the first direction from the node A to the node Z and the List SID of the tunnel in the second direction from the node Z to the node A, binding relationships of the bidirectional SR tunnel at the node A and the node Z, respectively. There are various ways for the controller to push, at each of both end points of the bidirectional SR tunnel respectively, a SR label stack on a user packet after placing the List SID, as a part of the SR label stack, into the SR label stack. In the current invention, in order to maintain the maximum compatibility with the ordinary SR segment list, the List SID may be placed at the innermost layer of the SR label stack as a part of the SR label stack, in this way, for the forwarding plane, when the head node of the network sends a packet through the SR tunnel, the List SID is placed at the innermost layer of the SR label stack as a part of the SR label stack, and the complete label stack (segment list and List SID) is pushed into the packet header at the source node. The packet carrying the SR segment list and List SID is forwarded in the MPLS/MPLS-TP network according to the existing rule. Thus, for an intermediate node receiving the user packet, the outer SR segment (segment list) is popped off according to the SR forwarding rule, and the inner List SID is not perceived, and then the user packet is forwarded again. Finally, the tail node can obtain the innermost List SID to identify a SR unidirectional tunnel.

In addition, a newly defined SR label stack may also be adopted, and in this case, the List SID is placed at a set position of the SR label stack as a part of the SR label stack and is pushed on the user packet, that is, it just needs to ensure that the tail node can obtain the List SID within the SR label stack in the user packet.

When the user packet arrives at the tail node, the tail node recognizes the difference between the List SID and the ordinary SR segment and the unidirectional SR tunnel represented by the List SID. After that, the tail node finds out the corresponding SR bidirectional tunnel according to the binding configuration of the bidirectional SR tunnel (i.e., the binding relationship of the bidirectional tunnel), and performs corresponding bidirectional tunnel processing (such as bidirectional tunnel OAM, bidirectional tunnel protection switching, etc., and at this time, other bidirectional tunnel technologies such as MPLS-TP OAM, MPLS-TP APS protocols, etc., can be used).

The parameter in the command of establishing a bidirectional SR tunnel needs to contain both end points (node A and node Z) of the tunnel. In some embodiments, the parameter includes information such as a routing strategy and a bandwidth parameter.

When the controller calculates the path between the node A and the node Z satisfying the requirement of the command, the path between the node A and the node Z satisfying the requirement of the command may be calculated based on a network topology, a routing strategy, a bandwidth constraint condition and the like.

It is noted that the meaning of the new label type List SID in the embodiment represents a unique end-to-end SR path. The definition of the label satisfies the following conditions:
1) The List SID has a label format compatible with an ordinary SR segment list, and is directly ignored by a device which do not recognize the label; here, the ordinary SR segment list (or the normal SR segment list) is an identifier that does not include the List SID in the embodiment of the present disclosure and is used for independently and uniquely identifying an end-to-end path of a tunnel, where a tunnel includes the ordinary SR segment list, but the ordinary SR segment list does not distinguish a transmission direction of the end-to-end path; however, the List SID distinguishes the transmission direction, for example, referring to Fig. 4, the transmission direction of the tunnel identified by the List SID1 is from the node A to the node E, and the transmission direction of the tunnel identified by the List SID2 is from the node E to the node A.
2) The label value of the List SID is used to represent a unique end-to-end SR path;
3) The List SID may optionally define a label identifier, priority, nested or not, and the like.

The generation of the List SID may be completed by the controller or the network management device, and specifically, any one of the following two manners may be adopted to generate the List SID.

Manner I: a List SID is assigned according to a segment list generated for an end-to-end SR path, and the List SID is unique at the tail node.

Manner II: a List SID is generated based on end-to-end service information, and the List SID is unique at the tail node.

The controller may be an intra-domain controller or a cross-domain controller of a network (e.g., Software Defined Network (SDN)). The intra-domain controller belongs to a particular domain, and the cross-domain controller connects two different domains of the network. The controller is a device belonging to the control plane of the network.

The network management device may be a device belonging to the management plane of the network, and may be used for a network manager to configure the network, for example, a SDN network. The network management device may be directly connected with the control plane and the data plane. The data plane may include various devices for data transmission, such as end points for establishing a tunnel, etc.

An embodiment of the present disclosure further provides a device for implementing a bidirectional segment routing tunnel, which can implement the method described above, and includes the following units: a first unit configured to, after receiving a command of establishing a bidirectional SR tunnel between a node A and a node Z, calculate a path between the node A and the node Z satisfying a requirement of the command, and assign unique List SIDs to a tunnel in a first direction from the node A to the node Z and a tunnel in a second direction from the node Z to the node A corresponding to the path, respectively; and a second unit configured to push, at each of both end points of the bidirectional SR tunnel respectively, a SR label stack on a user packet after placing the List SID, as a part of the SR label stack, into the SR label stack and forward the user packet. In the current invention, the first unit is further configured to establish, according to the List SID of the tunnel in the first direction from the node A to the node Z and the List SID of the tunnel in the second direction from the node Z to the node A, binding relationships of the bidirectional SR tunnel at the node A and the node Z, respectively.

The first unit is configured to calculate the path between the node A and the node Z satisfying the requirement of the command, and assign the unique List SIDs to the tunnel in the first direction from the node A to the node Z and the tunnel in the second direction from the node Z to the node A corresponding to the path, respectively in one of the following two manners.

Manner I: the path between the node A and the node Z satisfying the requirement of the command may be calculated at least based on a network topology, a routing strategy, a bandwidth constraint condition, and a unique List SID is assigned to the tunnel in the first direction from the node A to the node Z and a unique List SID is assigned to the tunnel in the second direction from the node Z to the node A, respectively, based on information about segments through which the path passes.

Manner II: a unique List SID is assigned based on service information of the tunnel in the first direction from the node A to the node Z corresponding to the path between the node A and the node Z satisfying the requirement of the command; and a unique List SID is assigned based on service information of the tunnel in the second direction from the node Z to the node A corresponding to the path between the node A and the node Z satisfying the requirement of the command.

In addition, there are various ways to configure the second unit to push, at each of both end points of the tunnel respectively, the SR label stack on the user packet after placing the List SID, as the part of the SR label stack, into the SR label stack.

In the current invention, in order to maintain the maximum compatibility with the ordinary SR segment list, the List SID may be placed at the innermost layer of the SR label stack as a part of the SR label stack, in this way, for the forwarding plane, when sending a packet through the SR tunnel, the List SID is placed at the innermost layer of the SR label stack as a part of the SR label stack, and the complete label stack (segment list and List SID) is pushed into the packet header at the source node. The packet carrying the SR segment list and List SID is forwarded in the MPLS/MPLS-TP network according to the existing rule. Thus, for an intermediate node receiving the user packet, the outer SR segment (segment list) is popped off according to the SR forwarding rule, and the inner List SID is not perceived, and then the user packet is forwarded again. Finally, the tail node can obtain the innermost List SID to identify a SR unidirectional tunnel.

In addition, a newly defined SR label stack may also be adopted, and in this case, the List SID is placed at a set position of the SR label stack as a part of the SR label stack and is pushed on the user packet, that is, it just needs to ensure that the tail node can obtain the List SID within the SR label stack in the user packet.

The foregoing aspects are described in further details with reference to the drawings and the specific embodiments, but it is to be understood that the following embodiments are only exemplary embodiments and are not intended to limit the scope of the embodiments of the present disclosure.

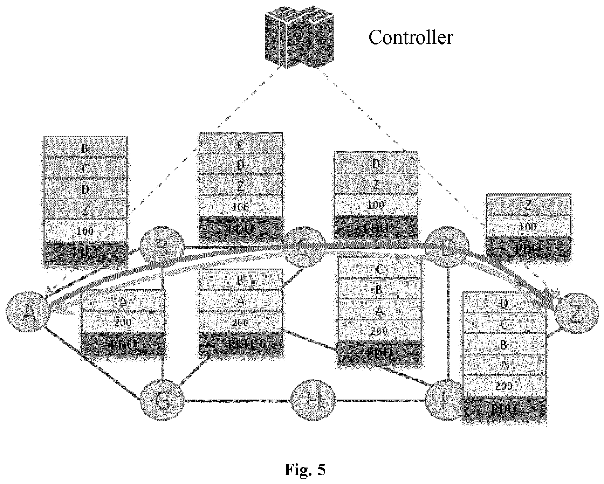

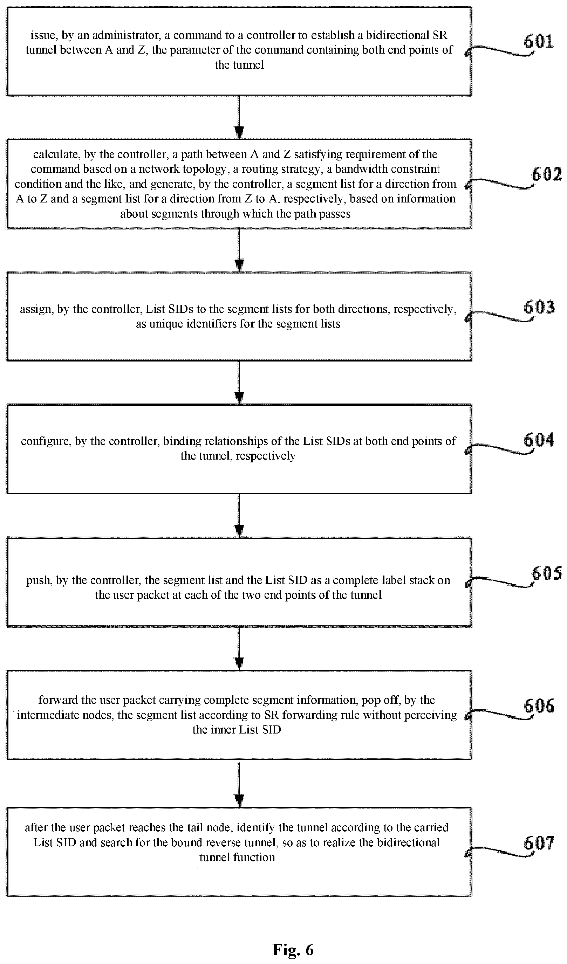

Taking the networking topology shown in Fig. 5 as an example, an implementation process of establishing a bidirectional SR tunnel is described in details. As shown in Fig. 6, the process includes the following operation steps.

At step S601, an administrator issues a command to a controller to establish a bidirectional SR tunnel between a node A and a node Z, and the parameter of the command needs to contain both end points (node A and node Z) of the tunnel. In some embodiments, the issued command may further include information such as a routing strategy and a bandwidth parameter.

At step S602, the controller calculates a path between the node A and the node Z satisfying a requirement of the command based on a network topology, a routing strategy, a bandwidth constraint condition and the like, and generates a segment list for a direction from the node A to the node Z and a segment list for a direction from the node Z to the node A, respectively, based on information about segments through which the path passes.

At step S603, the controller assigns List SIDs to the segment lists for both directions, respectively, as unique identifiers for the segment lists.

For example, a List SID=100 is assigned to the segment list (BCDZ) for the direction from the node A to the node Z, and a List SID=200 is assigned to the segment list (DCBA) for the direction from the node Z to the node A.

At step S604, the controller configures binding relationships of the List SIDs at both end points of the tunnel, respectively, where the binding relationships refer to the two List SIDs assigned in step S603, so as to implement establishment of a bidirectional tunnel through establishment of the binding relationships.

For example, the List SID with the OUT label of 100 and the List SID with the IN label of 200 are bound as a bidirectional tunnel at the node A, and similarly, the List SID with the OUT label of 200 and the List SID with the IN label of 100 are bound as a bidirectional tunnel at the node Z.

At step S605, the controller pushes the segment list and the List SID as a complete label stack on the user packet at each of the two end points of the tunnel.

At step S606, the user packet carrying complete segment information is forwarded, and an intermediate node pops off the segment list according to SR forwarding rule without perceiving the inner List SID.

At step S607, after the user packet reaches the tail node, the tunnel is identified according to the carried List SID and the bound reverse tunnel is searched for, so as to realize the bidirectional tunnel function.

An embodiment of the present disclosure provides a computer storage medium having stored thereon computer-executable instructions which, when executed, can implement the above method for implementing a bidirectional segment routing tunnel according to one or more of the above embodiments, for example, can implement the method illustrated in Fig. 6.

An embodiment of the present disclosure further provides an electronic apparatus, which may be the aforementioned controller or network management device, and may include: a memory; and a processor coupled to the memory and configured to execute computer-executable instructions stored in the memory to implement the above method for implementing a bidirectional segment routing tunnel according to one or more of the above embodiments, for example, to implement the method illustrated in Fig. 6.

The memory may include a storage device of a computer storage medium, which may be configured to store information, such as computer-executable instructions, and the computer-executable instructions may be source codes or compiled object codes, or the like.

The processor may be coupled to the memory through a bus or the like, and may implement the above method for implementing a bidirectional segment routing tunnel provided in one or more of the above embodiments by reading the computer-executable instructions in the memory.

It will be understood by those skilled in the art that all or part of the steps of the above methods may be implemented by a program instructing a relevant hardware, and the program may be stored in a computer readable storage medium, such as a read-only memory, a magnetic or optical disk, and the like. In some embodiments, all or part of the steps in the above embodiments may also be implemented using one or more integrated circuits. Accordingly, each module/unit in the above embodiments may be implemented in the form of hardware, and may also be implemented in the form of a software functional module. The present disclosure is not limited to any specific form of combination of hardware and software.

## Claims

1. A method for implementing a bidirectional segment routing, SR, (SR) tunnel, comprising:
after receiving, by a controller, a command of establishing a bidirectional SR tunnel between a node A and a node Z, calculating, by the controller, a path between the node A and the node Z satisfying a requirement of the command, and assigning, by the controller, unique List SIDs to a tunnel in a first direction from the node A to the node Z and a tunnel in a second direction from the node Z to the node A corresponding to the path, respectively, wherein each of the List SIDs is configured to identify a complete segment list of a unidirectional SR tunnel; and
pushing, by the controller and at each of both end points of the bidirectional SR tunnel, a SR label stack on a user packet after placing the List SID, as a part of the SR label stack, into the SR label stack, and forwarding the user packet,
wherein pushing, by the controller and at each of both end points of the bidirectional SR tunnel, a SR label stack on a user packet after placing the List SID, as a part of the SR label stack, into the SR label stack, comprises:
pushing, by the controller and at each of both end points of the bidirectional SR tunnel, the SR label stack on the user packet after placing the List SID, as the part of the SR label stack, into an innermost layer of the SR label stack,
wherein the both end points are the node A and the node Z,
the List SID placed at the node A is the List SID assigned to the tunnel in the first direction from the node A to the node Z to identify the tunnel in the first direction, and
the List SID placed at the node Z is the List SID assigned to the tunnel in the second direction from the node Z to the node A to identify the tunnel in the second direction.

2. The method of claim 1, further comprising:
popping-off, by an intermediate node receiving the user packet, a SR segment at an outer layer according to a SR forwarding rule without perceiving the List SID at an inner layer before forwarding the user packet.

3. The method of claim 1, further comprising:
establishing, according to the List SID of the tunnel in the first direction from the node A to the node Z and the List SID of the tunnel in the second direction from the node Z to the node A, binding relationships of the bidirectional SR tunnel at the node A and the node Z, respectively.

4. The method of claim 3, further comprising:
by a tail node receiving the user packet, obtaining the List SID from the user packet, identifying a tunnel corresponding to the List SID, and searching the binding relationship of the bidirectional SR tunnel for a reverse tunnel bound to the identified tunnel.

5. The method of any one of claims 1 to 4, wherein calculating, by the controller, a path between the node A and the node Z satisfying a requirement of the command, and assigning, by the controller, unique List SIDs to a tunnel in a first direction from the node A to the node Z and a tunnel in a second direction from the node Z to the node A corresponding to the path, respectively, comprises:
calculating, by the controller, the path between the node A and the node Z satisfying the requirement of the command at least based on a network topology, a routing strategy and a bandwidth constraint condition, and assigning, by the controller, the unique List SIDs to the tunnel in the first direction from the node A to the node Z and the tunnel in the second direction from the node Z to the node A, respectively, based on information about segments through which the path passes.

6. The method of any one of claims 1 to 4, wherein calculating, by the controller, a path between the node A and the node Z satisfying a requirement of the command, and assigning, by the controller, unique List SIDs to a tunnel in a first direction from the node A to the node Z and a tunnel in a second direction from the node Z to the node A corresponding to the path, respectively, comprises:
assigning the unique List SID based on service information of the tunnel in the first direction from the node A to the node Z corresponding to the path between the node A and the node Z satisfying the requirement of the command; and
assigning the unique List SID based on service information of the tunnel in the second direction from the node Z to the node A corresponding to the path between the node A and the node Z satisfying the requirement of the command.

7. A device for implementing a bidirectional segment routing, SR, (8R) tunnel, comprising:
a first unit configured to, after receiving a command of establishing a bidirectional SR tunnel between a node A and a node Z, calculate a path between the node A and the node Z satisfying a requirement of the command, and assign unique List SIDs to a tunnel in a first direction from the node A to the node Z and a tunnel in a second direction from the node Z to the node A corresponding to the path, respectively, wherein each of the List SIDs is configured to identify a complete segment list of a unidirectional SR tunnel; and
a second unit configured to push, at each of both end points of the bidirectional SR tunnel, a SR label stack on a user packet after placing the List SID, as a part of the SR label stack, into the SR label stack and forward the user packet,
wherein the second unit is configured to push, at each of the both end points of the bidirectional SR tunnel, the SR label stack on the user packet after placing the List SID, as the part of the SR label stack, into an innermost layer of the SR label stack,
wherein the both end points are the node A and the node Z,
the List SID placed at the node A is the List SID assigned to the tunnel in the first direction from the node A to the node Z to identify the tunnel in the first direction, and
the List SID placed at the node Z is the List SID assigned to the tunnel in the second direction from the node Z to the node A to identify the tunnel in the second direction.

8. The device of claim 7, wherein
the first unit is further configured to establish, according to the List SID of the tunnel in the first direction from the node A to the node Z and the List SID of the tunnel in the second direction from the node Z to the node A, binding relationships of the bidirectional SR tunnel at the node A and the node Z, respectively.

9. The device of claim 8, wherein
the first unit is configured to calculate the path between the node A and the node Z satisfying the requirement of the command at least based on a network topology, a routing strategy and a bandwidth constraint condition, and assign the unique List SIDs to the tunnel in the first direction from the node A to the node Z and the tunnel in the second direction from the node Z to the node A, respectively, based on information about segments through which the path passes.

10. The device of claim 7, wherein the first unit is configured to:
assign the unique List SID based on service information of the tunnel in the first direction from the node A to the node Z corresponding to the path between the node A and the node Z satisfying the requirement of the command; and
assign the unique List SID based on service information of the tunnel in the second direction from the node Z to the node A corresponding to the path between the node A and the node Z satisfying the requirement of the command.

11. A computer storage medium having stored thereon computer-executable instructions which, when executed, implement the method of any one of claims 1 to 6.

## Patentansprüche

1. Verfahren zum Implementieren eines bidirektionalen Segment-Routing (SR)-Tunnels, das folgendes umfasst:
nach dem Empfangen eines Befehls zum Erstellen eines bidirektionalen SR-Tunnels zwischen einem Knoten A und einem Knoten Z durch eine Steuereinheit, Berechnen eines Pfades durch die Steuereinheit zwischen dem Knoten A und dem Knoten Z, der eine Anforderung des Befehls erfüllt, und Zuweisen eindeutiger Listen-SIDs zu einem Tunnel in einer ersten Richtung von dem Knoten A zu dem Knoten Z bzw. einem Tunnel in einer zweiten Richtung von dem Knoten Z zu dem Knoten A entsprechend dem Pfad durch die Steuereinheit, wobei jede der Listen-SIDs konfiguriert ist, um eine vollständige Segmentliste eines unidirektionalen SR-Tunnels zu identifizieren; und
Schieben eines SR-Etikettenstapels auf ein Benutzerpaket durch die Steuereinheit und an jedem der beiden Endpunkte des bidirektionalen SR-Tunnels, nachdem die Listen-SID als ein Teil des SR-Etikettenstapels in den SR-Etikettenstapel platziert wurde, und Weiterleiten des Benutzerpakets,
wobei das Schieben eines SR-Etikettenstapels auf ein Benutzerpaket durch die Steuereinheit und an jedem der beiden Endpunkte des bidirektionalen SR-Tunnels nach dem Platzieren der Listen-SID als Teil des SR-Etikettenstapels in den SR-Etikettenstapel umfasst:
Schieben des SR-Etikettenstapels auf dem Benutzerpaket durch die Steuereinheit und an jedem der beiden Endpunkte des bidirektionalen SR-Tunnels, nachdem die Listen-SID als Teil des SR-Etikettenstapels in eine innerste Schicht des SR-Etikettenstapels platziert wurde,
wobei die beiden Endpunkte der Knoten A und der Knoten Z sind,
die an dem Knoten A platzierte Listen-SID die Listen-SID ist, die dem Tunnel in der ersten Richtung von dem Knoten A zu dem Knoten Z zugewiesen ist, um den Tunnel in der ersten Richtung zu identifizieren, und
die Listen-SID am Knoten Z ist die Listen-SID, die dem Tunnel in der zweiten Richtung vom Knoten Z zum Knoten A zugeordnet ist, um den Tunnel in der zweiten Richtung zu identifizieren.

2. Verfahren nach Anspruch 1, ferner umfassend:
Ablegen eines SR-Segments auf einer äußeren Schicht durch einen Zwischenknoten, der das Benutzerpaket empfängt, gemäß einer SR-Weiterleitungsregel, ohne die Listen-SID auf einer inneren Schicht vor der Weiterleitung des Benutzerpakets wahrzunehmen.

3. Verfahren nach Anspruch 1, ferner umfassend:
Erstellen von Bindungsbeziehungen des bidirektionalen SR-Tunnels am Knoten A bzw. am Knoten Z gemäß der Listen-SID des Tunnels in der ersten Richtung vom Knoten A zum Knoten Z und der Listen-SID des Tunnels in der zweiten Richtung vom Knoten Z zum Knoten A.

4. Verfahren nach Anspruch 3, ferner umfassend:
durch einen Endknoten, der das Benutzerpaket empfängt, Erhalten der Listen-SID aus dem Benutzerpaket, Identifizieren eines Tunnels, der der Listen-SID entspricht, und Durchsuchen der Bindungsbeziehung des bidirektionalen SR-Tunnels nach einem Rückwärtstunnel, der an den identifizierten Tunnel gebunden ist.

5. Verfahren nach einem der Ansprüche 1 bis 4, wobei durch die Steuereinheit ein Pfad zwischen dem Knoten A und dem Knoten Z berechnet wird, der eine Anforderung des Befehls erfüllt, und durch die Steuereinheit eindeutige Listen-SIDs einem Tunnel in einer ersten Richtung von dem Knoten A zu dem Knoten Z bzw. einem Tunnel in einer zweiten Richtung von dem Knoten Z zu dem Knoten A entsprechend dem Pfad zugewiesen werden, umfassend:
Berechnen des Pfades zwischen dem Knoten A und dem Knoten Z, der die Anforderung des Befehls erfüllt, durch die Steuereinheit zumindest auf der Grundlage einer Netzwerktopologie, einer Routingstrategie und einer Bandbreiteneinschränkungsbedingung, und Zuweisen der eindeutigen Listen-SIDs zu dem Tunnel in der ersten Richtung von dem Knoten A zu dem Knoten Z bzw. dem Tunnel in der zweiten Richtung von dem Knoten Z zu dem Knoten A durch die Steuereinheit auf der Grundlage von Informationen über Segmente, durch die der Pfad verläuft.

6. Verfahren nach einem der Ansprüche 1 bis 4, wobei durch die Steuereinheit ein Pfad zwischen dem Knoten A und dem Knoten Z berechnet wird, der eine Anforderung des Befehls erfüllt, und durch die Steuereinheit eindeutige Listen-SIDs einem Tunnel in einer ersten Richtung von dem Knoten A zu dem Knoten Z bzw. einem Tunnel in einer zweiten Richtung von dem Knoten Z zu dem Knoten A entsprechend dem Pfad zugewiesen werden, umfassend:
Zuweisen der eindeutigen Listen-SID auf der Grundlage von Dienstinformationen des Tunnels in der ersten Richtung von dem Knoten A zu dem Knoten Z, der dem Pfad zwischen dem Knoten A und dem Knoten Z entspricht, der die Anforderung des Befehls erfüllt; und
Zuweisen der eindeutigen Listen-SID auf der Grundlage von Dienstinformationen des Tunnels in der zweiten Richtung von dem Knoten Z zu dem Knoten A entsprechend dem Pfad zwischen dem Knoten A und dem Knoten Z, der die Anforderung des Befehls erfüllt.

7. Vorrichtung zum Implementieren eines bidirektionalen Segment-Routing (SR)-Tunnels, umfassend
eine erste Einheit, die konfiguriert ist, um nach dem Empfangen eines Befehls zum Erstellen eines bidirektionalen SR-Tunnels zwischen einem Knoten A und einem Knoten Z einen Pfad zwischen dem Knoten A und dem Knoten Z berechnet, der eine Anforderung des Befehls erfüllt, und eindeutige Listen-SIDs einem Tunnel in einer ersten Richtung von dem Knoten A zu dem Knoten Z bzw. einem Tunnel in einer zweiten Richtung von dem Knoten Z zu dem Knoten A entsprechend dem Pfad zuzuweisen, wobei jede der Listen-SIDs konfiguriert ist, um eine vollständige Segmentliste eines unidirektionalen SR-Tunnels zu identifizieren; und
eine zweite Einheit, die konfiguriert ist, um an jedem der beiden Endpunkte des bidirektionalen SR-Tunnels einen SR-Etikettenstapel auf ein Benutzerpaket zu schieben, nachdem sie die Listen-SID als einen Teil des SR-Etikettenstapels in den SR-Etikettenstapel platziert hat, und das Benutzerpaket weiterleitet,
wobei die zweite Einheit konfiguriert ist, um an jedem der beiden Endpunkte des bidirektionalen SR-Tunnels den SR-Etikettenstapel auf das Benutzerpaket zu schieben, nachdem die Listen-SID als Teil des SR-Etikettenstapels in eine innerste Schicht des SR-Etikettenstapels platziert wurde,
wobei die beiden Endpunkte der Knoten A und der Knoten Z sind,
die an dem Knoten A platzierte Listen-SID die Listen-SID ist, die dem Tunnel in der ersten Richtung von dem Knoten A zu dem Knoten Z zugewiesen ist, um den Tunnel in der ersten Richtung zu identifizieren, und
die Listen-SID am Knoten Z ist die Listen-SID, die dem Tunnel in der zweiten Richtung vom Knoten Z zum Knoten A zugeordnet ist, um den Tunnel in der zweiten Richtung zu identifizieren.

8. Vorrichtung nach Anspruch 7, wobei
die erste Einheit ferner konfiguriert ist, um gemäß der Listen-SID des Tunnels in der ersten Richtung von dem Knoten A zu dem Knoten Z und der Listen-SID des Tunnels in der zweiten Richtung von dem Knoten Z zu dem Knoten A Bindungsbeziehungen des bidirektionalen SR-Tunnels an dem Knoten A bzw. dem Knoten Z herzustellen.

9. Vorrichtung nach Anspruch 8, wobei
die erste Einheit konfiguriert ist, um den Pfad zwischen dem Knoten A und dem Knoten Z, der die Anforderung des Befehls erfüllt, zumindest auf der Grundlage einer Netzwerktopologie, einer Routingstrategie und einer Bandbreiteneinschränkungsbedingung zu berechnen und die eindeutigen Listen-SIDs dem Tunnel in der ersten Richtung von dem Knoten A zu dem Knoten Z bzw. dem Tunnel in der zweiten Richtung von dem Knoten Z zu dem Knoten A auf der Grundlage von Informationen über Segmente, durch die der Pfad verläuft, zuweist.

10. Vorrichtung nach Anspruch 7, wobei die erste Einheit konfiguriert ist, um:
die eindeutige Listen-SID auf der Grundlage von Dienstinformationen des Tunnels in der ersten Richtung vom Knoten A zum Knoten Z entsprechend dem Pfad zwischen dem Knoten A und dem Knoten Z zuzuweisen, der die Anforderung des Befehls erfüllt; und
die eindeutige Listen-SID auf der Grundlage von Dienstinformationen des Tunnels in der zweiten Richtung vom Knoten Z zum Knoten A entsprechend dem Pfad zwischen dem Knoten A und dem Knoten Z zuzuweisen, der die Anforderung des Befehls erfüllt.

11. Computerspeichermedium, auf dem computerausführbare Befehle gespeichert sind, die, wenn sie ausgeführt werden, das Verfahren nach einem der Ansprüche 1 bis 6 implementieren.

## Revendications

1. Procédé de mise en oeuvre d'un tunnel bidirectionnel de routage par segment (SR), comprenant les étapes suivantes :
après avoir reçu, par un contrôleur, une commande d'établissement d'un tunnel SR bidirectionnel entre un noeud A et un noeud Z, calculer, par le contrôleur, un chemin entre le noeud A et le noeud Z satisfaisant une exigence de la commande, et attribuer, par le contrôleur, un SID de liste uniques à un tunnel dans une première direction du noeud A au noeud Z et à un tunnel dans une deuxième direction du noeud Z au noeud A correspondant au chemin, respectivement, dans lequel chacun des SID de liste est configuré pour identifier une liste de segments complète d'un tunnel SR unidirectionnel ; et
pousser, par le contrôleur et à chacun des deux points d'extrémité du tunnel SR bidirectionnel, une pile d'étiquettes SR sur un paquet d'utilisateur après avoir placé le SID de liste, en tant que partie de la pile d'étiquettes SR, dans la pile d'étiquettes SR, et transmettre le paquet d'utilisateur,
dans lequel le fait de pousser, par le contrôleur et à chacun des deux points d'extrémité du tunnel bidirectionnel SR, une pile d'étiquettes SR sur un paquet utilisateur après avoir placé le SID de liste, en tant que partie de la pile d'étiquettes SR, dans la pile d'étiquettes SR, comprend :
pousser, par le contrôleur et à chacun des deux points d'extrémité du tunnel bidirectionnel SR, la pile d'étiquettes SR sur le paquet d'utilisateur après avoir placé le SID de liste, en tant que partie de la pile d'étiquettes SR, dans une couche la plus interne de la pile d'étiquettes SR,
dans laquelle les deux points d'extrémité sont le noeud A et le noeud Z,
le SID de liste placé au niveau du noeud A est le SID de liste attribué au tunnel dans la première direction du noeud A au noeud Z pour identifier le tunnel dans la première direction, et
le SID de liste placé au noeud Z est le SID de liste attribué au tunnel dans la deuxième direction du noeud Z au noeud A pour identifier le tunnel dans la deuxième direction.

2. Procédé de la revendication 1, comprenant en outre :
décoller, par un noeud intermédiaire recevant le paquet d'utilisateur, un segment SR au niveau d'une couche externe selon une règle de transfert SR sans percevoir le SID de liste au niveau d'une couche interne avant de transférer le paquet d'utilisateur.

3. Procédé de la revendication 1, comprenant en outre :
établir, selon le SID de liste du tunnel dans la première direction du noeud A au noeud Z et le SID de liste du tunnel dans la deuxième direction du noeud Z au noeud A, des relations de liaison du tunnel SR bidirectionnel au noeud A et au noeud Z, respectivement.

4. Procédé de la revendication 3, comprenant en outre :
par un noeud de queue recevant le paquet d'utilisateur, obtenir le SID de liste à partir du paquet d'utilisateur, identifier un tunnel correspondant au SID de liste, et rechercher la relation de liaison du tunnel SR bidirectionnel pour un tunnel inverse lié au tunnel identifié.

5. Procédé de l'une quelconque des revendications 1 à 4, dans lequel calculer, par le contrôleur, un chemin entre le noeud A et le noeud Z satisfaisant une exigence de la commande, et attribuer, par le contrôleur, des SIDs de liste uniques à un tunnel dans une première direction du noeud A au noeud Z et à un tunnel dans une deuxième direction du noeud Z au noeud A correspondant au chemin, respectivement, comprend :
calculer, par le contrôleur, un chemin entre le noeud A et le noeud Z satisfaisant l'exigence de la commande au moins sur la base d'une topologie de réseau, d'une stratégie de routage et d'une condition de contrainte de bande passante, et attribuer, par le contrôleur, des SIDs de liste uniques au tunnel dans la première direction du noeud A au noeud Z et au tunnel dans la deuxième direction du noeud Z au noeud A, respectivement, sur la base d'informations sur les segments par lesquels le chemin passe.

6. Procédé de l'une quelconque des revendications 1 à 4, dans lequel calculer, par le contrôleur, un chemin entre le noeud A et le noeud Z satisfaisant une exigence de la commande, et attribuer, par le contrôleur, des SIDs de liste uniques à un tunnel dans une première direction du noeud A au noeud Z et à un tunnel dans une deuxième direction du noeud Z au noeud A correspondant au chemin, respectivement, comprend:
attribuer le SID de liste unique sur la base des informations de service du tunnel dans la première direction du noeud A au noeud Z correspondant au chemin entre le noeud A et le noeud Z satisfaisant l'exigence de la commande ; et
attribuer le SID de liste unique sur la base des informations de service du tunnel dans la deuxième direction du noeud Z au noeud A correspondant au chemin entre le noeud A et le noeud Z satisfaisant l'exigence de la commande.

7. Dispositif pour mettre en oeuvre un tunnel bidirectionnel de routage par segment (SR), comprenant :
une première unité configurée pour, après avoir reçu une commande d'établissement d'un tunnel SR bidirectionnel entre un noeud A et un noeud Z, calculer un chemin entre le noeud A et le noeud Z satisfaisant une exigence de la commande, et attribuer des SIDs de liste uniques à un tunnel dans une première direction du noeud A au noeud Z et un tunnel dans une deuxième direction du noeud Z au noeud A correspondant au chemin, respectivement, dans lequel chacun des SIDs de liste est configuré pour identifier une liste de segments complète d'un tunnel SR unidirectionnel ; et
une deuxième unité configurée pour pousser, à chacun des deux points d'extrémité du tunnel SR bidirectionnel, une pile d'étiquettes SR sur un paquet d'utilisateur après avoir placé le SID de liste, en tant que partie de la pile d'étiquettes SR, dans la pile d'étiquettes SR et transférer le paquet d'utilisateur,
dans lequel la deuxième unité est configurée pour pousser, à chacun des deux points d'extrémité du tunnel bidirectionnel SR, la pile d'étiquettes SR sur le paquet d'utilisateur après avoir placé le SID de liste, en tant que partie de la pile d'étiquettes SR, dans une couche la plus interne de la pile d'étiquettes SR,
dans laquelle les deux points d'extrémité sont le noeud A et le noeud Z,
le SID de liste placé au niveau du noeud A est le SID de liste attribué au tunnel dans la première direction du noeud A au noeud Z pour identifier le tunnel dans la première direction, et
le SID de liste placé au noeud Z est le SID de liste attribué au tunnel dans la deuxième direction du noeud Z au noeud A pour identifier le tunnel dans la deuxième direction.

8. Dispositif de la revendication 7, dans lequel
la première unité est en outre configurée pour établir, selon le SID de liste du tunnel dans la première direction du noeud A au noeud Z et le SID de liste du tunnel dans la deuxième direction du noeud Z au noeud A, des relations de liaison du tunnel SR bidirectionnel au noeud A et au noeud Z, respectivement.

9. Dispositif de la revendication 8, dans lequel
la première unité est configurée pour calculer le chemin entre le noeud A et le noeud Z satisfaisant l'exigence de la commande au moins sur la base d'une topologie de réseau, d'une stratégie de routage et d'une condition de contrainte de bande passante, et attribuer les SIDs de liste uniques au tunnel dans la première direction du noeud A au noeud Z et au tunnel dans la deuxième direction du noeud Z au noeud A, respectivement, sur la base d'informations sur les segments par lesquels le chemin passe.

10. Dispositif de la revendication 7, dans lequel la première unité est configurée pour :
attribuer le SID de liste unique sur la base des informations de service du tunnel dans la première direction du noeud A au noeud Z correspondant au chemin entre le noeud A et le noeud Z satisfaisant l'exigence de la commande ; et
attribuer le SID de liste unique sur la base des informations de service du tunnel dans la deuxième direction du noeud Z au noeud A correspondant au chemin entre le noeud A et le noeud Z satisfaisant l'exigence de la commande.

11. Support de stockage informatique sur lequel sont stockées des instructions exécutables par ordinateur qui, lorsqu'elles sont exécutées, mettent en oeuvre le procédé de l'une quelconque des revendications 1 à 6.
